(19) Europäisches Patentamt
European Patent Office
Office européen des brevets

(11) **EP 2 764 334 B1**

(12) **FASCICULE DE BREVET EUROPEEN**

(45) Date de publication et mention
de la délivrance du brevet:
**22.07.2015 Bulletin 2015/30**

(21) Numéro de dépôt: **12770462.5**

(22) Date de dépôt: **02.10.2012**

(51) Int Cl.:
***G01J 1/42*** *(2006.01)*

(86) Numéro de dépôt international:
**PCT/EP2012/069456**

(87) Numéro de publication internationale:
**WO 2013/050366 (11.04.2013 Gazette 2013/15)**

(54) **PROCÉDÉ DE DÉTERMINATION SANS CONTACT DU RAYON D'UN FAISCEAU, SYSTÈME CORRESPONDANT**

BERÜHRUNGSLOSES VERFAHREN ZUR BESTIMMUNG DER STRAHLUNG EINES STRAHLS, ENTSPRECHENDES SYSTEM

CONTACTLESS METHOD FOR DETERMINING THE RAY OF A BEAM, CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2011 FR 1158904**

(43) Date de publication de la demande:
**13.08.2014 Bulletin 2014/33**

(73) Titulaire: **Commissariat à l'Énergie Atomique et aux Énergies Alternatives 75015 Paris (FR)**

(72) Inventeurs:
• **MELYUKOV, Dmitry**
  **F-75015 Paris (FR)**
• **THRO, Pierre-Yves**
  **F-75015 Paris (FR)**

(74) Mandataire: **Regimbeau**
  **20, rue de Chazelles**
  **75847 Paris Cedex 17 (FR)**

(56) Documents cités:
**US-A1- 2004 218 186     US-B1- 7 420 146**

**Description**

DOMAINE TECHNIQUE GENERAL

La présente invention concerne un procédé de mesure d'un rayon d'un faisceau de rayonnement.
Elle concerne également un système de mise en oeuvre du procédé.

ETAT DE L'ART

On connaît des méthodes pour mesurer des rayons de faisceaux de rayonnement (et donc les diamètres), utilisant par exemple des caméras ou des systèmes mécaniques associés à des mesureurs de puissance. Les documents US2004/218186 et US7420146 divulguent des méthodes pour mesurer des rayons de faisceaux de rayonnement.
Cependant, ces méthodes demandent un matériel optique onéreux, et/ou sont en général longues à mettre en oeuvre. De plus, les capteurs des caméras, par exemple, ont des dimensions assez faibles de l'ordre de quelques millimètres et ne permettent pas d'effectuer des mesures sur des faisceaux de tailles importantes.

PRESENTATION DE L'INVENTION

L'invention propose de pallier au moins un de ces inconvénients.
A cet effet, on propose selon l'invention un procédé de mesure d'un rayon r0 d'un faisceau de rayonnement, caractérisé en ce qu'il comporte les étapes selon lesquelles

- une source d'un faisceau de rayonnement excite par chauffage un étalon, de manière périodique à une fréquence, pour obtenir une excitation thermique périodique de l'étalon ;
- un capteur mesure une réponse thermique périodique de l'étalon, en réponse à l'excitation thermique périodique ;
- un processeur détermine un déphasage entre l'excitation thermique périodique et la réponse thermique périodique ; la source excitant l'étalon pour une pluralité de fréquences et le processeur déterminant un déphasage pour chaque fréquence, et déterminant ainsi une pluralité de déphasages;
- le processeur
- détermine un minimum $\varphi_{min}$ du déphasage grâce à la pluralité de déphasages ainsi déterminée, et
- détermine le rayon r0 du faisceau par une formule du type :

$$r0 = \Delta/g(\varphi_{min})$$

où $\Delta$ est l'épaisseur de l'étalon, et

g une fonction qui dépend du type de faisceau de rayonnement de chauffage.
L'invention est avantageusement complétée par les caractéristiques suivantes, prises seules ou en une quelconque de leur combinaison techniquement possible :

- la fonction g est du type polynomiale, les coefficients du polynôme étant fonction du type de faisceau de rayonnement de chauffage ;
- le processeur détermine le rayon r0 du faisceau, en mm, par la formule :

$$r0 = (100 \cdot \Delta) / \left( 0{,}227 \cdot \varphi_{min}^{\,3} + 57{,}856 \cdot \varphi_{min}^{\,2} + 5688{,}2 \cdot \varphi_{min} + 208620 \right)$$

où $\Delta$ est l'épaisseur de l'étalon, en $\mu$m.
- lorsque le faisceau de rayonnement de chauffage est du type uniforme, le processeur détermine le rayon r0 du faisceau, en mm, par la formule :

$$r0 = \Delta/(0{,}0032\ \varphi_{min}^{\,3} + 0{,}7405\ \varphi_{min}^{\,2} + 64{,}894\ \varphi_{min} + 2163{,}3)$$

pour $(1{,}68 < r_0/\Delta < 10)$ ;

$$r0 = \Delta/(6E\text{-}05\ \varphi_{min}^{4} + 0{,}0196\ \varphi_{min}^{3} + 2{,}2587\ \varphi_{min}^{2} + 125{,}58\ \varphi_{min} + 3046)$$

pour $(1{,}68 < r_0/\Delta < 20)$ ; et

$$r0 = \Delta/(2E\text{-}06\ \varphi_{min}^{5} + 0{,}0007\ \varphi_{min}^{4} + 0{,}0947\ \varphi_{min}^{3} + 6{,}8299\ \varphi_{min}^{2}$$
$$+ 261{,}57\ \varphi_{min} + 4627{,}7)$$

pour $(1{,}68 < r_0/\Delta < 100)$

où $\Delta$ est l'épaisseur de l'étalon, en $\mu$m.
- la source excite l'étalon de manière périodique sinusoïdale ;
- on a la relation :

$$1{,}5 \cdot \Delta \leq r0 \leq 20 \cdot \Delta\,.$$

L'invention concerne également un système de mise en oeuvre du procédé.

L'invention présente de nombreux avantages.

Elle permet de mesurer des rayons de faisceaux de rayonnement (et donc de déterminer des diamètres de faisceaux) avec un matériel peu onéreux, de manière simple et rapide.

L'invention ne nécessite que de connaître précisément l'épaisseur de l'étalon, sans connaitre sa conductivité thermique, sa capacité calorifique ou sa densité.

L'étalon peut être de forme quelconque, par exemple un tube ou une plaque, et en tout matériau homogène, et ne doit donc pas forcément présenter des caractéristiques particulières de conductivité électrique et/ou magnétique, de transparence optique ou d'impédance acoustique.

Une des conditions de la mesure est que l'étalon doit être dans un fluide ou posé sur un substrat thermiquement peu conducteur ou, plus précisément, être entouré d'un milieu transparent qui a une effusivité (l'effusivité est une grandeur qui rend compte de l'aptitude d'un corps ou d'un milieu à changer de température lorsqu'il reçoit un apport d'énergie thermique et s'exprime en $W.s^{0.5}/m^2.K$) très inférieure à celle de l'étalon (par exemple l'air). Cette condition n'est cependant pas contraignante.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 représente schématiquement un système possible de mise en oeuvre d'un procédé selon l'invention, pour une mesure d'un rayon d'un faisceau,
- la figure 2 représente schématiquement des étapes principales d'un procédé de mesure d'un rayon d'un faisceau selon l'invention ;
- la figure 3 représente une courbe de la température de surface de l'étalon soumis à une excitation thermique périodique ;
- la figure 4 représente l'influence de la diffusivité thermique sur le minimum d'un déphasage et sur des coefficients de sensibilité, pour une feuille de 300 $\mu$m d'épaisseur pour une taille de faisceau $r_0=3$ mm,

  - figure 4(a) : diffusivité égale à 0,1 $[x10^{-5}m^2/s]$,
  - figure 4(b) : diffusivité égale à 1 $[x10^{-5}m^2/s]$, et
  - figure 4(c) : diffusivité égale à 10 $[x10^{-5}m^2/s]$ ;

- la figure 5 représente l'influence de la répartition spatiale de l'énergie du faisceau laser sur le minimum d'un déphasage et sur des coefficients de sensibilité, pour une feuille de 600 $\mu$m d'épaisseur pour une taille de faisceau $r_0=3$ mm ;
- la figure 6 représente un nomogramme de l'épaisseur de l'étalon en fonction du minimum de déphasage pour des valeurs différentes du rayon du faisceau de chauffage ;

- la figure 7 représente l'influence du rapport $r_0/\Delta$ sur le minimum d'un déphasage et sur des coefficients de sensibilité, pour une feuille de 300 $\mu$m d'épaisseur et une diffusivité thermique de $10^{-5}$ m$^2$/s

  - figure 7(a) : rapport $r_0/\Delta$ égale à 1;
  - figure 7(b) : rapport $r_0/\Delta$ égale à 1,5;
  - figure 7(c) : rapport $r_0/\Delta$ égale à 2;
  - figure 7(d) : rapport $r_0/\Delta$ égale à 5;
  - figure 7(e) : rapport $r_0/\Delta$ égale à 20;
  - figure 7(f) : rapport $r_0/\Delta$ égale à 100 ;

- la figure 8 représente une répartition gaussienne de l'énergie dans le faisceau de chauffage ; et
- les figures 9A, 9B et 9C montrent des mesures de déphasage de la réponse thermique en fonction de la fréquence d'excitation, respectivement pour des étalons en acier inoxydable, en titane et en tungstène.

Sur l'ensemble des figures, les éléments similaires portent des références numériques identiques.

DESCRIPTION DETAILLEE

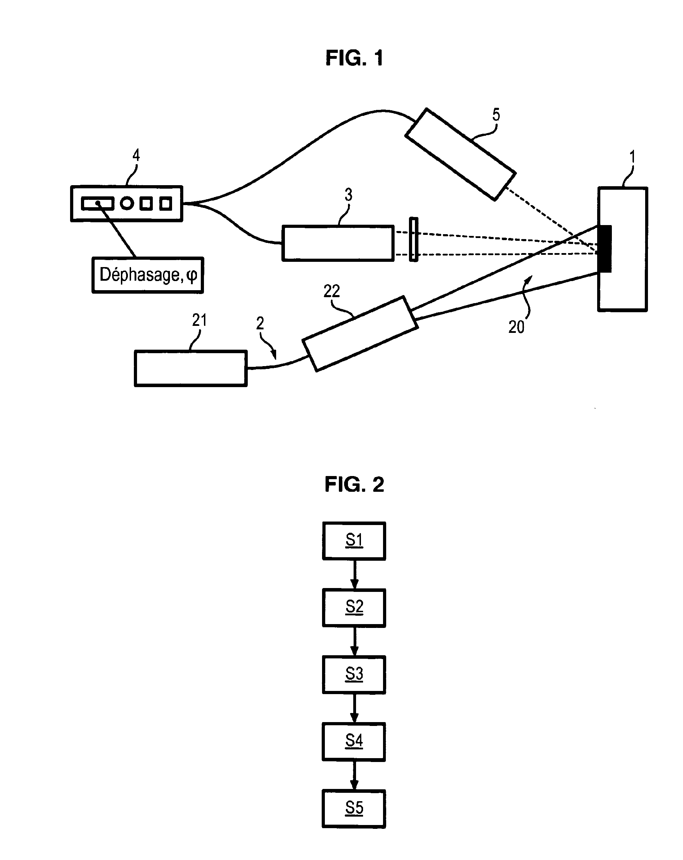

La figure 1 représente schématiquement un système possible de mise en oeuvre d'un procédé selon l'invention, pour une mesure d'un rayon r0 d'un faisceau 20 grâce à un étalon 1 dont on connaît précisément l'épaisseur $\Delta$, procédé dont des étapes principales sont représentées schématiquement à la figure 2.

L'étalon 1 est de forme quelconque, par exemple un tube ou une plaque, et peut être en tout matériau homogène (c'est-à-dire un matériau non composite). Le matériau ne doit pas forcément présenter des caractéristiques de conductivité électrique et/ou magnétique, d'impédance acoustique ou de transparence optique particulières (on comprend qu'il doit malgré tout être absorbant à la longueur d'onde d'excitation). Le matériau peut être par exemple à titre non limitatif de l'acier inoxydable, de l'aluminium, du titane, du tungstène, ou un alliage des métaux précités, ou du carbone.

L'étalon 1 doit être dans un fluide thermiquement peu conducteur ou posé sur un substrat thermiquement peu conducteur ou, plus précisément, être entouré d'un milieu, transparent et qui a une effusivité très inférieure à celle de la couche (par exemple l'air). Typiquement le rapport des effusivités entre l'étalon 1 et le milieu peu conducteur doit être de l'ordre de 1000.

Le système comporte principalement

- une source 2 d'un faisceau 20 de rayonnement dont le rayon r0 est à déterminer (le faisceau 20 doit pouvoir chauffer l'étalon 1 et l'étalon est donc opaque à la longueur d'onde du faisceau 20 utilisé) ;
- un capteur 3 d'une réponse thermique de l'étalon, en réponse à l'excitation thermique ; et
- un processeur 4.

La source 2 peut être toute source du faisceau 20 de rayonnement, mais pour que la mesure de son rayon r0 soit possible, le faisceau 20 doit être apte à chauffer l'étalon 1. A titre d'exemple non limitatif, la source 2 peut être un laser ou une diode laser.

La répartition de l'énergie E(r) dans le faisceau 20 peut être par exemple :

- circulaire, à savoir

$$E(r) = (1 - \frac{r}{2r0})^2 \cdot (1 + \frac{r}{2r0})^2 \text{, 0<r<2r0}$$

où r0 est le rayon du faisceau 20,
- gaussienne, à savoir

$$E(r) = e^{-(\frac{r}{r_0})^2} \text{,}$$

ou
- uniforme, à savoir

$$E(r) = 1, \; 0<r<r0$$

Comme on le verra plus en détail dans la suite de la présente description, la source 2 est modulée pour exciter l'étalon 1 de manière périodique, par exemple de manière sinusoïdale. La modulation peut être générée par un système extérieure à la source 2, par exemple un hacheur mécanique (appelé chopper en anglais) si la source 2 est continue.

En réponse à l'excitation, l'étalon 1 a une réponse thermique, le capteur 3 étant adapté pour mesurer la réponse thermique. Le pic de sensibilité du capteur 3 dépend de la température à laquelle s'effectue la mesure.

La réponse thermique de l'étalon 1 peut ainsi être, à titre non limitatif :

- une dilatation thermique de l'étalon 1,
- une variation de la réflectance d'une surface de l'étalon 1, c'est à dire le rapport de l'énergie réfléchie sur l'énergie incidente, généralement exprimée en décibel ou pourcentage ;
- une variation de l'émissivité de l'étalon, c'est à dire le rapport entre l'énergie qu'il rayonne et celle qu'un corps noir rayonnerait à la même température, rapport compris entre 0 et 1 ;
- une variation de la luminance, c'est-à-dire de l'intensité lumineuse calculée par rapport à une surface donnée (le $m^2$), généralement exprimée en candela par mètre carré ($cd/m^2$) ;
- etc.

A titre d'exemple non limitatif, pour mesurer une dilatation thermique de l'étalon et/ou une variation de la réflectance d'une surface de l'étalon et/ou une variation de la luminance de l'étalon, le capteur peut être un capteur optique ou acoustique.

L'exemple de la figure 1, non limitatif, décrit un capteur 3 optique mesurant une réponse thermique consistant en une variation de la luminance de l'étalon 1. Le capteur 3 est ainsi un capteur HgCdZnTe, sensible entre 2 et 11 $\mu$m (infrarouge moyen), car les mesures s'effectuent pour des températures comprises entre 20°C et quelques centaines de degrés Celsius (typiquement 200°C). Sur la figure 1, le capteur 3 est un capteur de la marque VIGO avec une bande spectrale de 3-11 $\mu$m avec un temps de réponse de 7 ns.

Le processeur 4 comporte classiquement tous les moyens de mémoire, de traitement et de calcul pour la mise en oeuvre d'un procédé selon l'invention. Il peut notamment comporter un amplificateur de détection synchrone, connu en soi par l'homme du métier, pour la mesure d'un déphasage comme on le verra plus en détail dans la suite de la présente description. D'autres moyens informatiques que l'amplificateur de détection synchrone sont bien entendu possibles.

Pour pouvoir mesurer le déphasage entre une excitation thermique de l'étalon 1 et une réponse thermique de l'étalon 1 à l'excitation, le processeur 4 est relié d'une part au capteur 3 et d'autre part à un capteur 5 auxiliaire, observant directement l'excitation de l'étalon 1. Le capteur 5 est avantageusement une photodiode silicium. L'observation directe de l'excitation de l'étalon 1 par le capteur 5 auxiliaire permet d'éviter de devoir prendre en compte un déphasage parasitaire dû à la source 2 dans les calculs de mesure de l'épaisseur. Le déphasage parasitaire précité peut être par exemple dû à

- un déphasage entre un signal électrique d'un générateur 21 de la source 2 et une émission du faisceau 20 par un laser 22 de la source 2 ;
- un déphasage entre l'émission du faisceau 20 par le laser 22 de la source et une excitation réelle de l'étalon 1,
- etc.

On comprend que le processeur 4 peut également être relié à la source et non à un capteur auxiliaire si le déphasage dû à la source 2 est pris en compte dans les calculs de mesure de l'épaisseur.

Selon un procédé possible de mesure du rayon r0 du faisceau 20, lors d'une étape S1, la source 2 excite l'étalon 1 de manière périodique grâce au faisceau 20, pour obtenir une excitation thermique périodique de l'étalon 1, par chauffage.

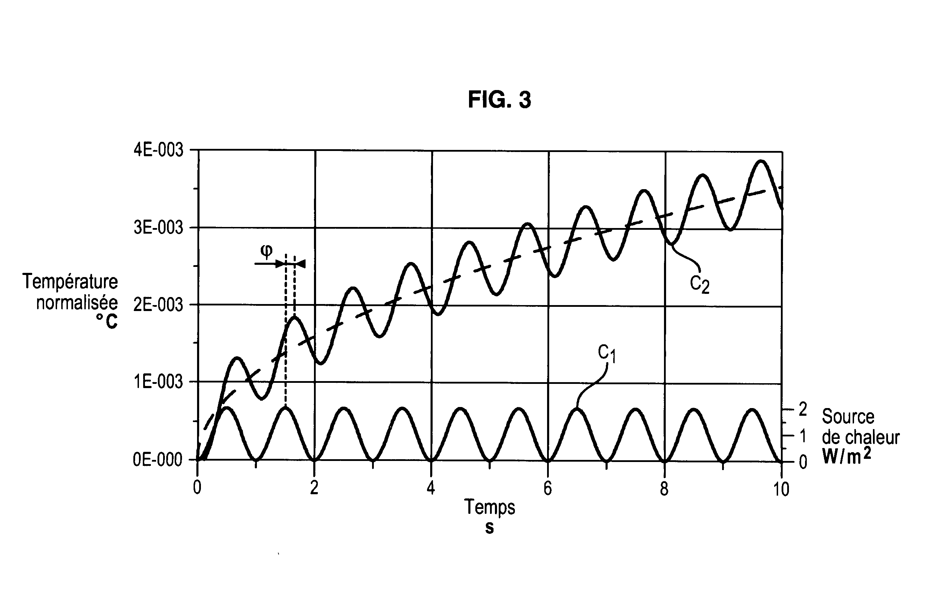

Comme le montre la courbe C1 de la figure 3, l'excitation de manière périodique s'effectue par exemple de manière sinusoïdale, mais peut également être une excitation périodique, en créneau par exemple ou autre. La courbe C1 de la figure 3 est tracée pour une fréquence d'excitation f d'une seconde par exemple.

Comme on peut le constater sur la courbe C2 de la figure 3, lors d'une étape S2, le capteur 3 mesure une réponse thermique périodique de l'étalon 1, en réponse à l'excitation thermique périodique. La réponse thermique est par exemple ici la variation de la luminance de l'étalon due à la variation de température de l'étalon 1.

Lors d'une étape S3, le processeur 4 détermine expérimentalement un déphasage $\varphi$ entre l'excitation thermique périodique et la réponse thermique périodique, c'est-à-dire l'écart par exemple entre un sommet de la courbe C1 et un sommet correspondant de la courbe C2.

La source 2 excite l'étalon 1 pour une pluralité de fréquences f (typiquement une quinzaine de fréquences, les fréquences étant comprises par exemple entre 1 Hz et 10kHz, en fonction de l'étalon 1) et le processeur 4 détermine un déphasage pour chaque fréquence f d'excitation, et déterminant ainsi une pluralité de déphasages φ.

Lors d'une étape S4, le processeur 4 détermine un minimum $\varphi_{min}$ du déphasage φ grâce à la pluralité de déphasages ainsi déterminée. La méthode d'interpolation de $\varphi_{min}$ à partir de la pluralité de déphasages déterminée par le processeur 4, et utilisée pour obtenir le minimum $\varphi_{min}$, est connue de l'homme du métier, par exemple une interpolation polynomiale ou autre.

La détermination de $\varphi_{min}$ est importante pour la détermination du rayon r0.

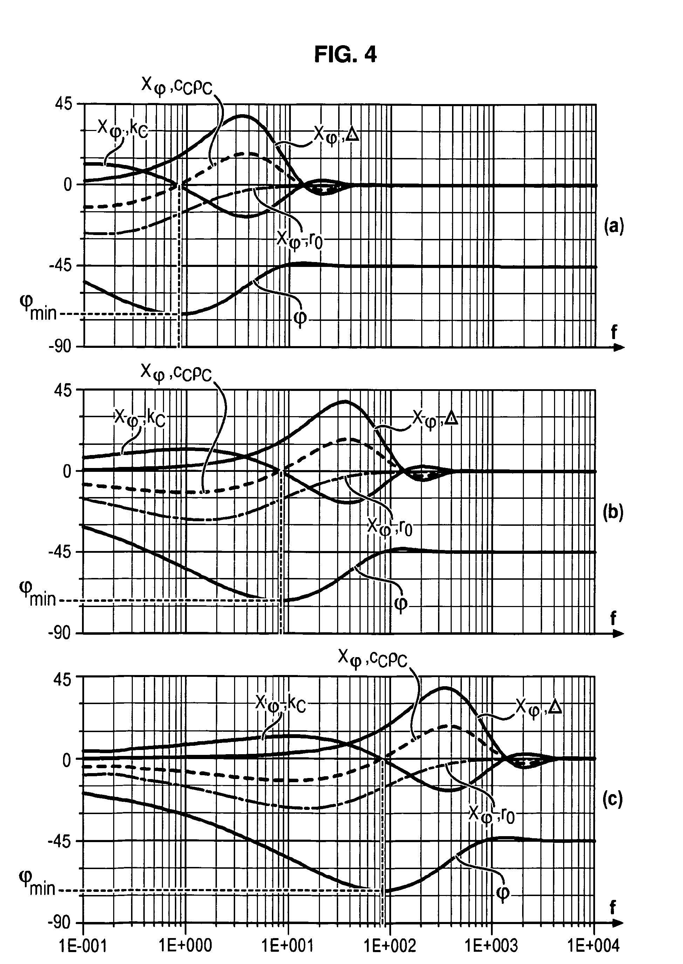

Les inventeurs ont en effet découvert que, comme le montre la figure 4, de manière tout à fait inattendue, la valeur de $\varphi_{min}$ est indépendante des variations des propriétés thermiques de l'étalon, et permet de déterminer le rayon r0, comme expliqué ci-après.

ETAPE PRELIMINAIRE

La figure 4 reprend la courbe de la phase φ(f), avec l'équation (E1), connue de l'homme du métier :

$$\varphi(f) = \arg \int_0^\infty \frac{0{,}5\xi \cdot e^{-0{,}25\xi^2}}{\left(\dfrac{\xi}{r_0}\right)^2 - i2\pi f \dfrac{C_c \rho_c}{k_c} - \alpha^2} \times A \cdot d\xi$$

où

$$A = \left[ \frac{2\alpha \cdot e^{-\kappa_1 \Delta}}{\kappa_1 D} \left\{ \left(e^{-\alpha\Delta} - e^{-\kappa_1\Delta}\right)\left(1 + Rk_S\kappa_2\right) + \left(e^{-\kappa_1\Delta} - \frac{\kappa_1}{\alpha}e^{-\alpha\Delta}\right)\frac{k_S\kappa_2}{k_C\kappa_1} \right\} + \left(1 - \frac{\alpha}{\kappa_1}\right) \right]$$

et où

$$D = \left(1 + e^{-2\kappa_1\Delta}\right)\frac{k_S\kappa_2}{k_C\kappa_1} + \left(1 - e^{-2\kappa_1\Delta}\right)\left(1 + Rk_S\kappa_2\right),$$

$$\kappa_1 = \sqrt{\left(\frac{\xi}{r_0}\right)^2 - i2\pi f \frac{C_C\rho_C}{k_C}}, \quad \kappa_2 = \sqrt{\left(\frac{\xi}{r_0}\right)^2 - i2\pi f \frac{C_S\rho_S}{k_S}}$$

où

$\xi$ - variable indépendante,
c - capacité calorifique massique, [J/kg·K],
$\rho$ - densité [kg/m$^3$],
k - conductivité thermique, [W/m·K],
R - résistance thermique éventuelle entre l'étalon et le milieu, [m$^2$K·W$^{-1}$],
$\alpha$ - coefficient d'absorption de l'étalon à la longueur d'onde d'excitation, [m$^{-1}$], et
où les indices c et s correspondent respectivement à l'étalon et au milieu,

Pour mieux comprendre comment chaque paramètre influence la courbe de la phase φ(f) de la figure 4 (et en conséquence la possibilité d'extraire ces paramètres à partir de cette courbe), on procède à une analyse numérique de sensibilité pour chacun desdits paramètres thermophysiques de l'étalon 1.

Des coefficients X de sensibilité réduits sont définis, et obtenus par modélisation:

$$X_{\varphi,\chi} = \chi \, \frac{\partial \varphi}{\partial \chi}$$

Chaque coefficient X de sensibilité indique comment la phase $\varphi$ est modifiée pour une variation relative donnée du paramètre $\chi$. On comprend en effet qu'on ne peut identifier un paramètre $\chi$ que si la phase $\varphi$ est sensible à sa variation.

On trace également sur la figure 4 les coefficients X de sensibilité pour les paramètres $\chi$ suivants :

- l'épaisseur $\Delta$ de l'étalon 1 ;
- le rayon r0 du faisceau 20 de rayonnement de chauffage ;
- la conductivité thermique kc de l'étalon 1 ; et
- la capacité calorifique $c_C \rho_C$ de l'étalon 1.

Les courbes de la figure 4 ont été ainsi réalisées avec différentes valeurs numériques de la diffusivité thermique de l'étalon par exemple, c'est-à-dire la grandeur physique qui caractérise la capacité de l'étalon à transmettre la chaleur d'un point à un autre de celui-ci par conduction ; la diffusivité thermique est égale au rapport de la conductivité thermique sur la capacité calorifique volumique, et s'exprime en $m^2/s$ et est généralement notée a. Sur la figure 4, la diffusivité thermique prend les valeurs $0{,}1\times10\text{-}5$ $m^2/s$ (figure 4(a)), $1\times10\text{-}5$ $m^2/s$ (figure 4(b)) et $10\times10\text{-}5$ $m^2/s$ (figure 4(c)).

Sur la figure 4, on voit que la variation des propriétés thermiques de l'étalon 1, sous la forme de la diffusivité thermique, translate certes la courbe de déphasage $\varphi$ dans le domaine des fréquences plus élevées lorsque la diffusivité augmente, mais que le minimum de déphasage de $\varphi_{min}$ reste toujours indépendant de la diffusivité thermique et a toujours la même valeur.

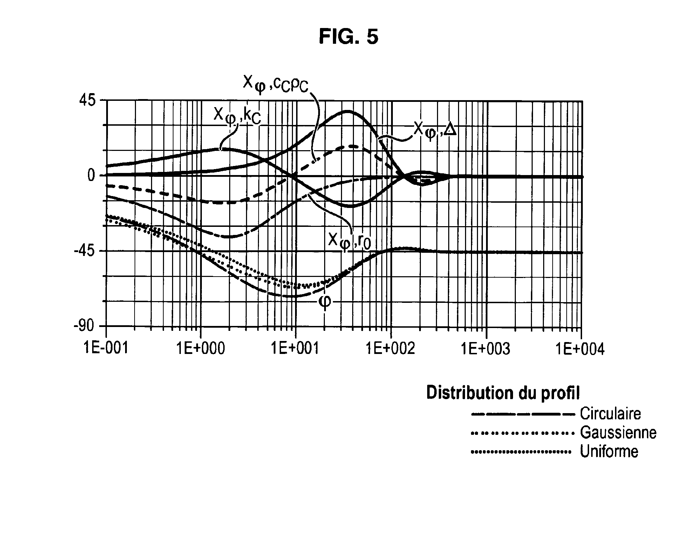

On constate de plus que pour la valeur de la fréquence d'excitation donnant $\varphi_{min}$, les coefficients de sensibilité $X\varphi{,}kc$ et $X\varphi{,}cc\rho c$ s'annulent, c'est-à-dire qu'à cette fréquence, la phase ne dépend pas de la conductivité thermique kc de l'étalon 1 ni de la capacité calorifique $c_C \rho_C$ de l'étalon 1. En revanche, pour cette valeur de la fréquence d'excitation, $\varphi_{min}$ dépend de l'épaisseur $\Delta$ de l'étalon 1 et du rayon r0 du faisceau 20 de rayonnement de chauffage (car les sensibilités correspondantes sont non nulles, et sont en fait corrélées : cela signifie que la valeur $\varphi_{min}$ dépend du rapport $\Delta/r_0$). Comme le montre la figure 5, la fréquence d'excitation donnant le minimum $\varphi_{min}$ et sa valeur absolue varie certes en fonction de la forme du faisceau (pour une distribution d'énergie dans le faisceau respectivement circulaire, gaussienne ou uniforme), mais restent indépendantes de la diffusivité (car les sensibilités $X\varphi{,}kc$ et $X\varphi{,}cc\rho c$ correspondantes sont non nulles).

En d'autres termes, l'épaisseur $\Delta$ étant connue, il est possible de déterminer, à partir de $\varphi min$, la valeur du rayon r0 du faisceau 20, et ce sans connaître la conductivité thermique kc de l'étalon 1 ni sa capacité calorifique $cc\rho c$.

Or il n'y a pas de formule analytique qui donne directement la valeur du rayon r0 du faisceau 20 en fonction :

- du minimum $\varphi min$ de déphasage, et
- de l'épaisseur $\Delta$.

Par conséquent, lors d'une étape préliminaire au procédé, on trace donc une pluralité de courbes selon la figure 4, à partir de calculs numériques conformément à (E1), pour différentes valeurs numériques de l'épaisseur $\Delta$ et du rayon $r_0$.

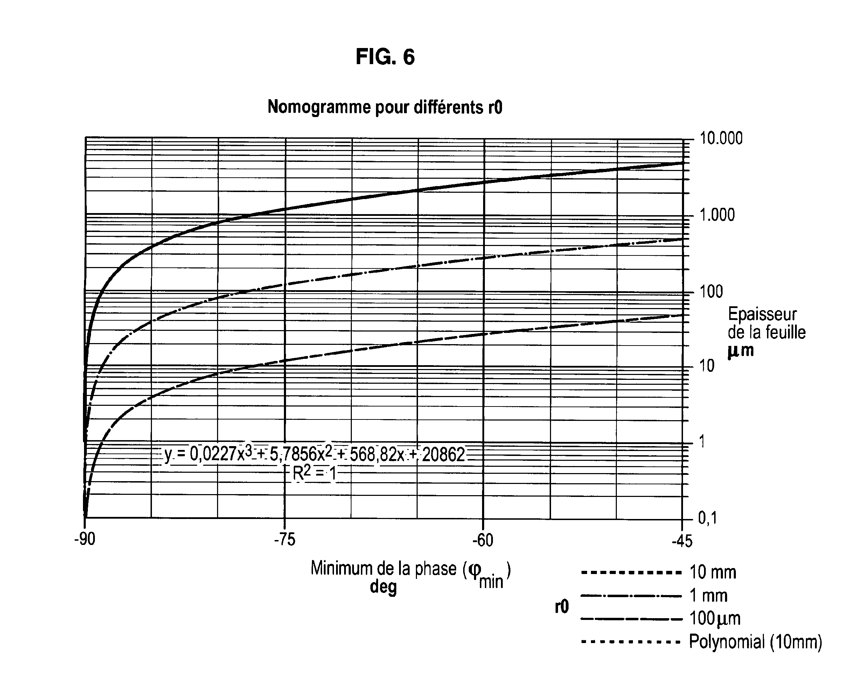

A partir de la pluralité de valeurs de $\varphi_{min}$ numériques ainsi obtenues, on trace les courbes de la figure 6, reprenant la valeur de l'épaisseur $\Delta$ en fonction de chaque $\varphi_{min}$ numérique obtenu, par exemple pour trois valeurs numériques du rayon r0 du faisceau 20 de chauffage gaussien, à savoir respectivement 10 mm, 1 mm et 100 $\mu$m (on rappelle ici que pour une répartition spatiale différente du faisceau, les courbes seraient différentes).

On constate que les courbes de la figure 6, obtenues numériquement, sont parallèles pour les différentes valeurs de $r_0$, et l'on en déduit que la phase $\varphi cmin$ dépend du rapport $\Delta/r_0$.

Les courbes de la figure 6 sont obtenues numériquement, mais il est possible de trouver, également lors de l'étape préliminaire précitée, une fonction analytique g qui approxime une desdites courbes obtenues numériquement, comme le montre la courbe en pointillés de la figure 6 (exemple d'une approximation polynomiale de degré 3 pour approximer la courbe tracée pour r0 égal à 10 mm).

On détermine ainsi, à partir d'une des courbes numériques de la figure 6, une fonction approximative g($\varphi min$) telle que :

$$\Delta/r_0 = g(\varphi_{min}),$$

où g est une fonction qui dépend du type de faisceau 20 de rayonnement de chauffage.

La fonction g peut prendre toute forme d'approximation analytique pour une des courbes de la figure 6.

Préférentiellement, mais non limitativement, la fonction g est du type polynomiale (voir figure 6), les coefficients du polynôme étant fonction du type de faisceau 20 de rayonnement de chauffage. Le degré du polynôme peut être quelconque (plus le rapport r0/Δ est grand, plus l'utilisation d'un polynôme de degré élevé est nécessaire pour obtenir une bonne précision), par exemple 5, 4 ou 3.

Cette approximation g peut être ainsi faite, par exemple, grâce une formule du type (polynôme de degré 3) :

$$\Delta / r0 = \left( \alpha \cdot \varphi_{\min}{}^3 + \beta \cdot \varphi_{\min}{}^2 + \gamma \cdot \varphi_{\min} + \delta \right)$$

où le quadruplet ($\alpha$, $\beta$, $\gamma$, $\delta$) est fonction du type de faisceau de rayonnement de chauffage, $\Delta$ étant exprimé en $\mu$m et r0 en mm.

Par exemple, lorsque le faisceau 20 de rayonnement de chauffage est du type gaussien, et comme le montre la figure 6, g est donné par la formule :

$$\frac{\Delta}{r0} = \frac{1}{100} \cdot \left( 0,227 \cdot \varphi_{\min}{}^3 + 57,856 \cdot \varphi_{\min}{}^2 + 5688,2 \cdot \varphi_{\min} + 208620 \right)$$

Selon un autre exemple, lorsque le faisceau 20 de rayonnement de chauffage est du type uniforme :

$$\Delta/r0 = (0,0032 \, \varphi_{\min}{}^3 + 0,7405 \, \varphi_{\min}{}^2 + 64,894 \, \varphi_{\min} + 2163,3)$$

$$\text{pour } (1,68 < r_0/\Delta < 10)$$

$$\Delta/r0 = (6E\text{-}05 \, \varphi_{\min}{}^4 + 0,0196 \, \varphi_{\min}{}^3 + 2,2587 \, \varphi_{\min}{}^2 + 125,58 \, \varphi_{\min} + 3046)$$

$$\text{pour } (1,68 < r_0/\Delta < 20)$$

$$\Delta/r0 = (2E\text{-}06 \, \varphi_{\min}{}^5 + 0,0007 \, \varphi_{\min}{}^4 + 0,0947 \, \varphi_{\min}{}^3 + 6,8299 \, \varphi_{\min}{}^2$$

$$+ 261,57 \, \varphi_{\min} + 4627,7)$$

$$\text{pour } (1,68 < r_0/\Delta < 100)$$

La détermination de la fonction g approximative d'une des courbes de la figure 6 est effectuée lors d'une étape préliminaire au déroulement du procédé (par exemple avant l'étape S1), mais ne correspond pas à une étape de calibration par rapport à l'étalon comme dans l'art antérieur.

En effet, les courbes de la figure 4 sont obtenues numériquement à partir de la relation (E1), et les courbes de la figure 6, reprenant les valeurs numériques de $\varphi$min, sont, comme on l'a vu, indépendantes des caractéristiques du matériau de l'étalon 1.

La réalisation des courbes de la figure 4, de celles de la figure 6 et la détermination de g par interpolation peuvent être réalisées par des moyens classiques de traitement et de calcul, par exemple mais pas nécessairement, le processeur 4.

Après avoir décrit ci-dessus l'étape préliminaire de détermination de g, on reprend le cours de la description d'un exemple d'un procédé selon l'invention.

Une fois qu'il a déterminé expérimentalement $\varphi$min, lors de l'étape S4, grâce à la pluralité de déphasages $\varphi$ sur l'étalon 1, le processeur 4 peut donc ensuite déterminer, lors de l'étape S5, le rayon r0 par une formule du type :

$$r0 = \Delta/g(\varphi_{\min}).$$

Avec les exemples précédents, lorsque le faisceau 20 de rayonnement de chauffage est du type gaussien, le processeur 4 détermine, lors de l'étape S5, le rayon r0, en mm, par la formule :

$$r0 = 100 \cdot \Delta / \left(0{,}227 \cdot \varphi_{\min}{}^3 + 57{,}856 \cdot \varphi_{\min}{}^2 + 5688{,}2 \cdot \varphi_{\min} + 208620\right)$$

où $\Delta$ est l'épaisseur de l'étalon 1, en $\mu$m.

De même, lorsque le faisceau de rayonnement de chauffage est du type uniforme, le processeur 4 détermine le rayon r0, en mm, par la formule :

$$r0 = \Delta / (0{,}0032\ \varphi_{\min}{}^3 + 0{,}7405\ \varphi_{\min}{}^2 + 64{,}894\ \varphi_{\min} + 2163{,}3)$$

pour $(1{,}68 < r_0/\Delta < 10)$ ;

$$r0 = \Delta / (6\text{E-}05\ \varphi_{\min}{}^4 + 0{,}0196\ \varphi_{\min}{}^3 + 2{,}2587\ \varphi_{\min}{}^2 + 125{,}58\ \varphi_{\min} + 3046)$$

pour $(1{,}68 < r_0/\Delta < 20)$ ; et

$$r0 = \Delta / (2\text{E-}06\ \varphi_{\min}{}^5 + 0{,}0007\ \varphi_{\min}{}^4 + 0{,}0947\ \varphi_{\min}{}^3 + 6{,}8299\ \varphi_{\min}{}^2 + 261{,}57\ \varphi_{\min} + 4627{,}7)$$

pour $(1{,}68 < r_0/\Delta < 100)$

où $\Delta$ est l'épaisseur de l'étalon 1, en $\mu$m.

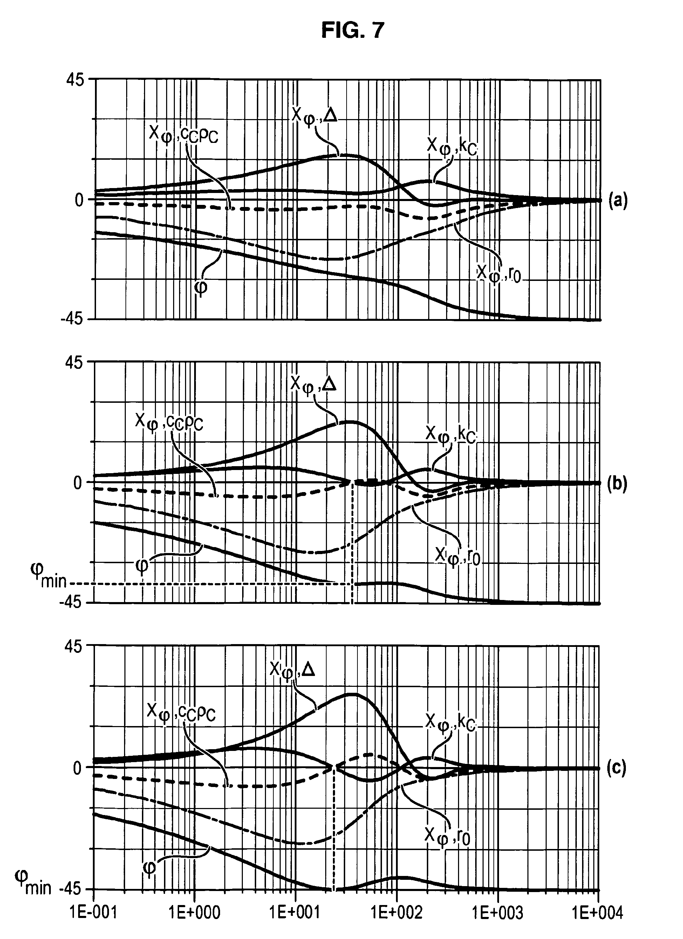

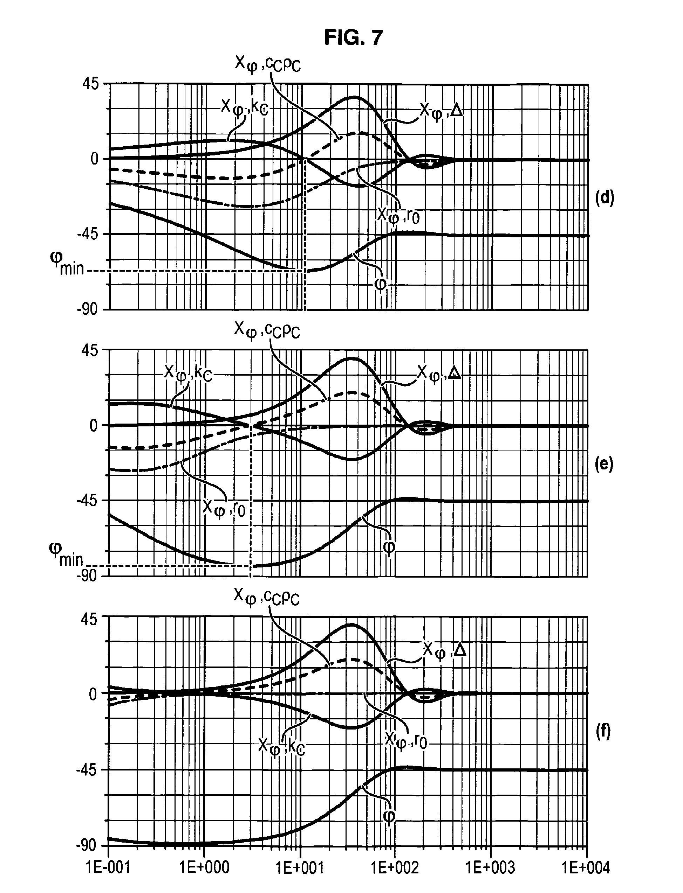

Les figures 7 montrent que des résultats de simulation de déphasages pour un étalon 1, avec une diffusivité thermique a=10-5 m2/s et une épaisseur $\Delta$ de 300 $\mu$m, pour différents rapports de r0/$\Delta$.

On constate sur les figures 7 que dans le cas d'un rapport précité égal à 1 (figure 7(a)), il n'existe pas de minimum pour les coefficients de sensibilité X$\varphi$,kc et X$\varphi$,ccpc. L'apparition d'extrema indépendants de la diffusivité commence à partir du rapport r0/$\Delta \approx$1,5 (figure 7(b)). Lorsque la valeur du rapport r0/$\Delta$ continue d'augmenter, on perd la sensibilité du minimum par rapport à l'épaisseur de la couche, et quand le rayon r0 devient cent fois plus grand que l'épaisseur $\Delta$ (figure 7(f)), l'extraction du minimum devient quasi impossible. Par conséquent, on a la relation

$$1{,}5 \cdot \Delta \leq r0 \leq 20 \cdot \Delta \,.$$

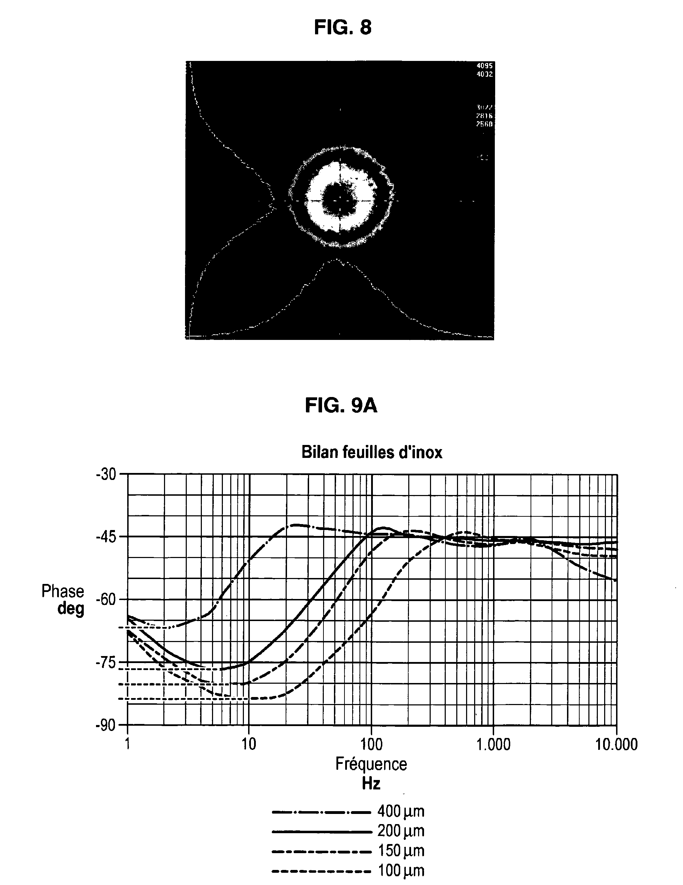

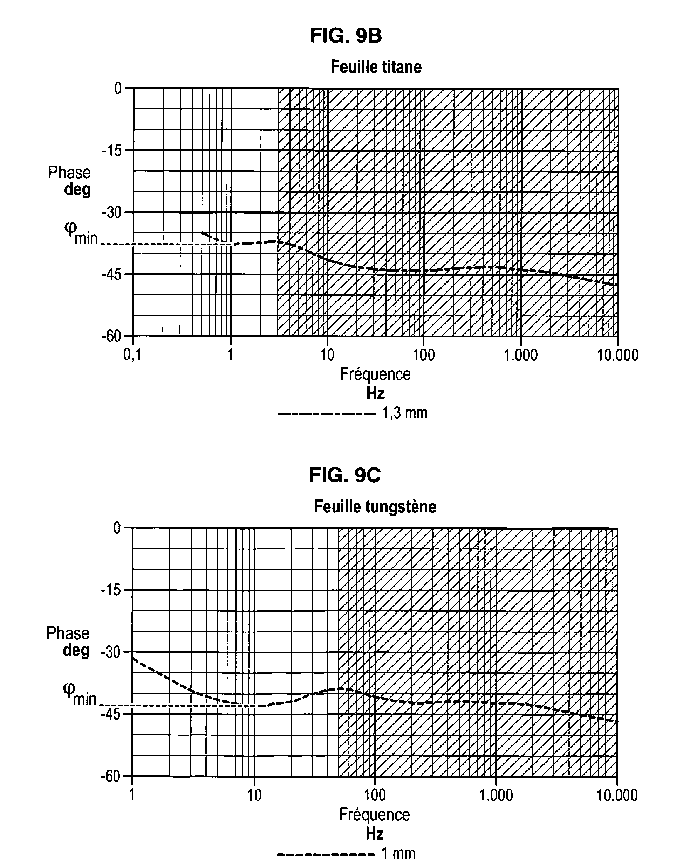

Comme le montrent les figures 9, des mesures ont été effectuées pour :

- des étalons en forme de tôles d'acier inoxydable d'épaisseurs comprises entre 100 et 400 $\mu$m (figure 9A) ;
- un étalon en forme de plaque de titane, d'épaisseur égale à 1,3mm (r0=2,07mm) (figure 9B) ; et
- un étalon en forme de plaque de tungstène, d'épaisseur égale à 1 mm (r0=2,07mm) (figure 9C).

Les zones de fréquences d'excitation trop élevées ne doivent bien entendu pas être prises en compte.

Dans tous les cas des figures 9, la précision obtenue sur la mesure du rayon r0 est comprise entre 2% et 10%, avec une valeur comprise généralement autour de 5%.

**Revendications**

1. Procédé de mesure d'un rayon r0 d'un faisceau (20) de rayonnement, **caractérisé en ce qu'**il comporte les étapes selon lesquelles

    - une source (2) d'un faisceau (20) de rayonnement excite (S1) par chauffage un étalon (1), de manière périodique à une fréquence (f), pour obtenir une excitation thermique périodique de l'étalon (1) ;

- un capteur (3) mesure (S2) une réponse thermique périodique de l'étalon, en réponse à l'excitation thermique périodique ;
- un processeur (4) détermine (S3) un déphasage ($\varphi$) entre l'excitation thermique périodique et la réponse thermique périodique ;
la source (2) excitant l'étalon pour une pluralité de fréquences (f) et le processeur (4) déterminant un déphasage pour chaque fréquence (f), et déterminant ainsi une pluralité de déphasages ($\varphi$) ;
- le processeur (4)

- détermine (S4) un minimum $\varphi_{min}$ du déphasage ($\varphi$) grâce à la pluralité de déphasages ainsi déterminée, et
- détermine (S5) le rayon r0 du faisceau (20) par une formule du type :

$$r0 = \Delta/g(\varphi_{min})$$

où $\Delta$ est l'épaisseur de l'étalon (1), et
g une fonction qui dépend du type de faisceau (20) de rayonnement de chauffage.

2. Procédé selon la revendication 1, dans lequel la fonction g est du type polynomiale, les coefficients du polynôme étant fonction du type de faisceau (20) de rayonnement de chauffage.

3. Procédé selon la revendication 2, dans lequel, lorsque le faisceau (20) de rayonnement de chauffage est du type gaussien, le processeur (4) détermine (S5) le rayon r0 du faisceau, en mm, par la formule :

$$r0 = (100 \cdot \Delta)/\left(0{,}227 \cdot \varphi_{min}^{\ 3} + 57{,}856 \cdot \varphi_{min}^{\ 2} + 5688{,}2 \cdot \varphi_{min} + 208620\right)$$

où $\Delta$ est l'épaisseur de l'étalon (1), en $\mu$m.

4. Procédé selon la revendication 1, dans lequel, lorsque le faisceau de rayonnement de chauffage est du type uniforme, le processeur (4) détermine (S5) le rayon r0 du faisceau, en mm, par la formule :

$$r0 = \Delta/(0{,}0032\ \varphi_{min}^{\ 3} + 0{,}7405\ \varphi_{min}^{\ 2} + 64{,}894\ \varphi_{min} + 2163{,}3)$$

$$\text{pour } (1{,}68 < r_0/\Delta < 10) ;$$

$$r0 = \Delta/(6E\text{-}05\ \varphi_{min}^{\ 4} + 0{,}0196\ \varphi_{min}^{\ 3} + 2{,}2587\ \varphi_{min}^{\ 2} + 125{,}58\ \varphi_{min} + 3046)$$

$$\text{pour } (1{,}68 < r_0/\Delta < 20) ; \text{ et}$$

$$r0 = \Delta/(2E\text{-}06\ \varphi_{min}^{\ 5} + 0{,}0007\ \varphi_{min}^{\ 4} + 0{,}0947\ \varphi_{min}^{\ 3} + 6{,}8299\ \varphi_{min}^{\ 2}$$
$$+ 261{,}57\ \varphi_{min} + 4627{,}7)$$

$$\text{pour } (1{,}68 < r_0/\Delta < 100)$$

où $\Delta$ est l'épaisseur de l'étalon (1), en $\mu$m.

5. Procédé selon l'une des revendications 1 à 4, dans lequel la source (2) excite (S1) l'étalon (1) de manière périodique sinusoïdale.

6. Procédé selon l'une des revendications 1 à 5, dans lequel on a la relation :

$$1{,}5 \cdot \Delta \leq r0 \leq 20 \cdot \Delta \,.$$

**7.** Système de mesure d'un rayon r0 d'un faisceau (20) de rayonnement, **caractérisé en ce qu'**il comporte

- une source (2) d'un faisceau (20) de rayonnement, pour exciter (S1) par chauffage l'étalon (1) de manière périodique, pour obtenir une excitation thermique périodique de l'étalon (1) ;
- un capteur (3), pour mesurer (S2) une réponse thermique périodique de l'étalon, en réponse à l'excitation thermique périodique ;
- un processeur (4) pour

- déterminer (S3) un déphasage ($\varphi$) entre l'excitation thermique périodique et la réponse thermique périodique pour chaque fréquence de la pluralité de fréquences (f),
- déterminer (S4) un minimum $\varphi_{min}$ du déphasage ($\varphi$) ainsi déterminé, et
- déterminer (S5) le rayon r0 du faisceau (20) de rayonnement par une formule du type :

$$r0 = \Delta/g(\varphi_{min})$$

où $\Delta$ est l'épaisseur de l'étalon (1), et
g une fonction qui dépend du type de faisceau (20) de rayonnement de chauffage.

**8.** Système selon la revendication 7, dans lequel la source (2) est un laser ou une diode laser.

**9.** Système selon l'une des revendications 7 ou 8, dans lequel le capteur (3) est un capteur optique ou acoustique.

**Patentansprüche**

**1.** Verfahren zum Messen eines Strahls r0 eines Strahlenbündels (20), **dadurch gekennzeichnet, dass** es die Schritte umfasst, nach denen

- eine Quelle (2) eines Strahlenbündels (20) durch Erhitzen einen Standard (1) auf periodische Weise auf eine Frequenz (f) erregt (S1), um eine periodische thermische Erregung des Standards (1) zu erhalten;
- ein Sensor (3) eine periodische thermische Reaktion des Standards in Antwort auf die periodische thermische Erregung misst (S2);
- ein Prozessor (4) eine Phasenverschiebung ($\varphi$) zwischen der periodischen thermischen Erregung und der periodischen thermischen Reaktion bestimmt (S3);
wobei die Quelle (2) den Standard für eine Vielzahl von Frequenzen (f) erregt und der Prozessor (4) eine Phasenverschiebung für jede Frequenz (f) bestimmt und somit eine Vielzahl von Phasenverschiebungen bestimmt ($\varphi$) ;
- der Prozessor (4)
- ein Minimum $\varphi_{min}$ der Phasenverschiebung ($\varphi$) dank der Vielzahl von so bestimmten Phasenverschiebungen bestimmt (S4), und
- den Strahl r0 des Bündels (20) durch eine Formel der folgenden Art bestimmt (S5):

$$r0 = \Delta/g(\varphi_{min})$$

wobei $\Delta$ die Dicke des Standards (1) ist, und
g eine Funktion ist, die von der Art des Strahlenbündels (20) der Erhitzung abhängt.

**2.** Verfahren nach Anspruch 1, wobei die Funktion g von der polynomialen Art ist, wobei die Koeffizienten des Polynoms von der Art des Strahlenbündels (20) der Erhitzung abhängen.

3. Verfahren nach Anspruch 2, wobei, wenn das Strahlenbündel (20) der Erhitzung von der Gaußschen Art ist, der Prozessor (4) den Strahl r0 des Bündels in mm durch die folgende Formel bestimmt (S5):

$$r0 \ = \ (100 \cdot \Delta) / (0,227 \cdot \varphi_{min}^{3} \ + \ 57,856 \cdot \varphi_{min}^{2} \ + \ 5688,2 \cdot \varphi_{min} \ + \ 208620)$$

wobei $\Delta$ die Dicke des Standards (1) in $\mu$m ist.

4. Verfahren nach Anspruch 1, wobei, wenn das Strahlenbündel der Erhitzung von der gleichförmigen Art ist, der Prozessor (4) den Strahl r0 des Bündels in mm durch die folgende Formel bestimmt (S5):

$$r0 \ = \ \Delta / (0,0032 \ \varphi_{min}^{3} \ + \ 0,7405 \ \varphi_{min}^{2} \ + \ 64,894 \ \varphi_{min} \ + \ 2163,3)$$
$$\text{für} \ (1,68 < r_{0}/\Delta < 10);$$

$$r0 \ = \ \Delta / (6E-05 \ \varphi_{min}^{4} \ + \ 0,0196 \ \varphi_{min}^{3} \ + \ 2,2587 \ \varphi_{min}^{2} \ + \ 125,58 \ \varphi_{min} \ + \ 3046)$$
$$\text{für} \ (1,68 < r_{0}/\Delta < 20); \ \text{und}$$

$$r0 \ = \ \Delta / (2E-06 \ \varphi_{min}^{5} \ + \ 0,0007 \ \varphi_{min}^{4} \ + \ 0,0947 \ \varphi_{min}^{3} \ + \ 6,8299 \ \varphi_{min}^{2} \ + \ 261,57 \ \varphi_{min} \ + \ 4627,7)$$
$$\text{für} \ (1,68 < r_{0}/\Delta < 100)$$

wobei $\Delta$ die Dicke des Standards (1) in $\mu$m ist.

5. Verfahren nach einem der Ansprüche 1 bis 4, wobei die Quelle (2) den Standard (1) auf sinusoidale periodische Weise erregt (S1).

6. Verfahren nach einem der Ansprüche 1 bis 5, wobei die folgende Beziehung vorliegt:

$$1,5 \cdot \Delta \ \leq \ r0 \ \leq \ 20 \cdot \Delta.$$

7. System zum Messen eines Strahls r0 eines Strahlenbündels (20), **dadurch gekennzeichnet, dass** es Folgendes umfasst

- eine Quelle (2) eines Strahlenbündels (20), um auf periodische Weise den Standard (1) durch Erhitzen zu erregen, um eine periodische thermische Erregung des Standards (1) zu erhalten;
- einen Sensor (3), um eine periodische thermische Reaktion des Standards in Antwort auf die periodische thermische Erregung zu messen (S2);
- einen Prozessor (4), um

  - eine Phasenverschiebung ($\varphi$) zwischen der periodischen thermischen Erregung und der periodischen thermischen Reaktion für jede Frequenz der Vielzahl von Frequenzen (f) zu bestimmen (S3),
  - ein Minimum $\varphi_{min}$ der so bestimmten Phasenverschiebung ($\varphi$) zu bestimmen (S4), und
  - den Strahl r0 des Strahlenbündels (20) durch eine Formel der folgenden Art zu bestimmen (S5):

$$r0 = \Delta/g(\varphi_{min})$$

wobei $\Delta$ die Dicke des Standards (1) ist, und
g eine Funktion ist, die von der Art des Strahlenbündels (20) der Erhitzung abhängt.

8. System nach Anspruch 7, wobei die Quelle (2) ein Laser oder eine Laserdiode ist.

9. System nach einem der Ansprüche 7 oder 8, wobei der Sensor (3) ein optischer oder ein akustischer Sensor ist.

**Claims**

1. Process for measuring a radius r0 of a radiation beam (20), **characterised in that** it comprises the steps whereby

   - a source (2) of a radiation beam (20) excites (S1) by heating a standard (1), periodically at a frequency (f), to obtain a periodical thermal excitation of the standard (1);
   - a sensor (3) measures (S2) a periodic thermal response from the standard, in response to the periodic thermal excitation;
   - a processor (4) determines (S3) a phase shift ($\varphi$) between the periodic thermal excitation and the periodic thermal response;
   the source (2) exciting the standard for a plurality of frequencies (f) and the processor (4) determining a phase shift for each frequency (f), and thus determining a plurality of phase shifts ($\varphi$);
   - the processor (4)

     - determines (S4) a minimum $\varphi_{min}$ of the phase shift ($\varphi$) by means of the plurality of phase shifts determined in this way, and
     - determines (S5) the radius r0 of the beam (20) using a formula of the type:

$$r0 = \Delta/g(\varphi_{min})$$

   where $\Delta$ is the thickness of the standard (1), and
   g is a function dependent on the type of heating radiation beam (20).

2. Process according to claim 1, wherein the function g is of the polynomial type, the polynomial coefficients being dependent on the type of heating radiation beam (20).

3. Process according to claim 2, wherein, when the heating radiation beam (20) is of the Gaussian type, the processor (4) determines (S5) the radius r0 of the beam, in mm, using the formula:

$$r0 = (100 \cdot \Delta)/(0.227 \cdot \varphi_{min}^{3} + 57.856 \cdot \varphi_{min}^{2} + 5688.2 \cdot \varphi_{min} + 208620)$$

where $\Delta$ is the thickness of the standard (1), in $\mu$m.

4. Process according to claim 1, wherein, when the heating radiation beam is of the uniform type, the processor (4) determines (S5) the radius r0 of the beam, in mm, using the formula:

$$r0 = \Delta/(0.0032\ \varphi_{min}^{3} + 0.7405\ \varphi_{min}^{2} + 64.894\ \varphi_{min} + 2163.3)$$
$$\text{for } (1.68 < r_0/\Delta < 10);$$

$$r0 = \Delta/(6E\text{-}05\ \varphi_{min}^{4} + 0.0196\ \varphi_{min}^{3} + 2.2587\ \varphi_{min}^{2} +$$
$$125.58\ \varphi_{min} + 3046)$$
$$\text{for } (1.68 < r_0/\Delta < 20); \text{ and}$$

and

$$r0 = \Delta/(2E\text{-}06\ \varphi_{min}^{5} + 0.0007\ \varphi_{min}^{4} + 0.0947\ \varphi_{min}^{3} +$$
$$6.8299\ \varphi_{min}^{2} + 261.57\ \varphi_{min} + 4627.7)$$
$$\text{for } (1.68 < r_0/\Delta < 100)$$

where $\Delta$ is the thickness of the standard (1), in $\mu$m.

5. Process according to any of claims 1 to 4, wherein the source (2) excites (S1) the standard (1) in a periodic sinusoidal manner.

6. Process according to any of claims 1 to 5, wherein the following equation is given:

$$1.5 \cdot \Delta \le r0 \le 20 \cdot \Delta.$$

7. System for measuring a radius r0 of a radiation beam (20), **characterised in that** it comprises

   - a source (2) of a radiation beam (20), for exciting (S1) by heating the standard (1), periodically, to obtain a periodical thermal excitation of the standard (1);
   - a sensor (3), for measuring (S2) a periodic thermal response from the standard, in response to the periodic thermal excitation;
   - a processor (4) for
   - determining (S3) a phase shift ($\varphi$) between the periodic thermal excitation and the periodic thermal response for each frequency of the plurality of frequencies (f),
   - determining (S4) a minimum $\varphi_{min}$ of the phase shift ($\varphi$) determined in this way, and
   - determining (S5) the radius r0 of the beam (20) using a formula of the type:

$$r0 = \Delta/g(\varphi_{min})$$

   where $\Delta$ is the thickness of the standard (1), and
   g is a function dependent on the type of heating radiation beam (20).

8. System according to claim 7, wherein the source (2) is a laser or a laser diode.

9. System according to any of claims 7 or 8, wherein the sensor (3) is an optical or acoustic sensor.

## FIG. 1

## FIG. 2

**FIG. 3**

## FIG. 4

# FIG. 5

FIG. 6

Nomogramme pour différents r0

$y = 0,0227x^3 + 5,7856x^2 + 568,82x + 20862$
$R^2 = 1$

Epaisseur
de la feuille
μm

Minimum de la phase ($\phi_{min}$)
deg

r0

------------ 10 mm

—·——·——·— 1 mm

————————— 100 μm

------------ Polynomial (10mm)

EP 2 764 334 B1

# FIG. 7

**FIG. 7**

# FIG. 8

# FIG. 9A

**Bilan feuilles d'inox**

— · — · — · — 400 µm

———————— 200 µm

— — — — — — — 150 µm

- - - - - - - - - - 100 µm

## FIG. 9B

### Feuille titane

Phase
**deg**

$\varphi_{min}$

Fréquence
**Hz**

— — — — — — 1,3 mm

## FIG. 9C

### Feuille tungstène

Phase
**deg**

$\varphi_{min}$

Fréquence
**Hz**

— — — — — — 1 mm

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004218186 A
- US 7420146 B